# EUROPÄISCHE PATENTANMELDUNG

(11) **EP 4 775 948 A1**
(43) Veröffentlichungstag der Anmeldung: **15.07.2026**
(21) Anmeldenummer: 25221887.0
(22) Anmeldetag: 09.12.2025
(51) Int. Cl.: G01M 11/06

(54) **SYSTEM UND VERFAHREN ZUM BESTIMMEN UND ANPASSEN EINER EINSTELLUNG WENIGSTENS EINES KRAFTFAHRZEUGSCHEINWERFERS**

(30) Priorität: 08.01.2025 DE 102025100397
(71) Anmelder: Beissbarth Automotive Testing Solutions GmbH, 82205 Gilching (DE)
(72) Erfinder: Schlehuber, Felix, 82205 Gilching (DE)
(74) Vertreter: Schmitt-Nilson Schraud Waibel Wohlfrom Patentanwälte Partnerschaft mbB

(57) **Zusammenfassung**

Ein System zum Bestimmen der Einstellung wenigstens eines Scheinwerfers (5) in einem Kraftfahrzeug (4) umfasst ein Fahrwerksvermessungssystem (9), das dazu vorgesehen und ausgebildet ist, die Position und die Lage der Karosserie (6) des Kraftfahrzeugs (4) zu bestimmen, und wenigstens einen Lichtsensor (20), der dazu vorgesehen und ausgebildet ist, ein Bild wenigstens eines Teils des von dem wenigstens einen Scheinwerfer (5) ausgesendeten Lichtes aufzunehmen. Der wenigstens eine Lichtsensor (20) ist mit einem optisch erfassbaren Muster (16) verbunden, das es ermöglicht, die Position und die Ausrichtung des wenigstens einen Lichtsensors (20) zu bestimmen. Das System umfasst auch eine Auswertevorrichtung (22), die dazu vorgesehen und ausgebildet ist, aus dem Bild, das von dem wenigstens einen Lichtsensor (20) aufgenommen worden ist, unter Berücksichtigung der von dem Fahrwerksvermessungssystem (9) bestimmten Position und Lage der Karosserie (6) und/oder der geometrischen Fahrachse und/oder der Fahrzeuglängsmittelachse (A) des Kraftfahrzeugs (4) und des wenigstens einen Lichtsensors (20) die aktuelle Einstellung des wenigstens einen Scheinwerfers (5) zu bestimmen.

## Beschreibung

Die Erfindung betrifft ein System und ein Verfahren zum Bestimmen und Anpassen einer Einstellung wenigstens eines Kraftfahrzeugscheinwerfers.

Kraftfahrzeuge sind mit Kraftfahrzeugscheinwerfern ausgestattet, um, insbesondere bei Dunkelheit, den Bereich vor dem Kraftfahrzeug so zu beleuchten, dass ein sicherer Betrieb des Kraftfahrzeugs möglich ist.

Um den Bereich vor dem Kraftfahrzeug gut zu beleuchten und Blendungen des Gegenverkehrs zu vermeiden, muss die Einstellung der Kraftfahrzeugscheinwerfer regelmäßig überprüft und ggf. korrigiert werden.

Gesetzlich vorgeschrieben ist nur ein Überprüfen der vertikalen Ausrichtung der Kraftfahrzeugscheinwerfer. Dazu muss das Kraftfahrzeug auf einer Ebene angeordnet sein, die möglichst exakt horizontal ausgerichtet ist.

Moderne Kraftfahrzeuglichtsysteme, die häufig mit Fahrerassistenzsystemen gekoppelt sind, blenden das Fernlicht während der Fahrt automatisch ab, wenn eine im Kraftfahrzeug verbaute Kamera Fahrzeuge im Gegenverkehr erkennt. Diese Kameras sind je nach Hersteller unterschiedlich kalibriert, manche auf die Längssymmetrieachse der Karosserie, andere auf die geometrische Fahrachse des Fahrwerks oder auf die Fahrzeuglängsmittelachse.

Es ist eine Aufgabe der Erfindung, ein verbessertes System und ein verbessertes Verfahren zum Bestimmen und ggf. Korrigieren der Einstellungen von Kraftfahrzeugscheinwerfern bereitzustellen, wobei sowohl die vertikale als auch die horizontale Ausrichtung des Kraftfahrzeugs und der Kraftfahrzeugscheinwerfer berücksichtigt werden.

Ein erfindungsgemäßes System zum Bestimmen der Einstellung wenigstens eines Scheinwerfers in einem Kraftfahrzeug umfasst ein Fahrwerksvermessungssystem, das dazu vorgesehen und ausgebildet ist, die Position und die Lage der Karosserie, insbesondere die Längssymmetrieachse der Karosserie, und/oder der geometrischen Fahrachse und/oder der Fahrzeuglängsmittelachse des Kraftfahrzeugs zu bestimmen, und wenigstens einen Lichtsensor, der dazu vorgesehen und ausgebildet ist, ein Bild wenigstens eines Teils des von dem wenigstens einen Scheinwerfer ausgesendeten Lichtes aufzunehmen. Der wenigstens eine Lichtsensor ist direkt oder indirekt mit einem optisch erfassbaren Muster, insbesondere ein Reflexionsmuster, verbunden, das es ermöglicht, die Position und die Ausrichtung des wenigstens einen Lichtsensors zu bestimmen. Ein erfindungsgemäßes System umfasst auch eine Auswertevorrichtung, die dazu vorgesehen und ausgebildet ist, aus dem Bild, das von dem wenigstens einen Lichtsensor aufgenommen worden ist, unter Berücksichtigung der von dem Fahrwerksvermessungssystem bestimmten Position und Lage der Karosserie und/oder der geometrischen Fahrachse und/ oder der Fahrzeuglängsmittelachse des Kraftfahrzeugs und des wenigstens einen Lichtsensors die aktuelle Einstellung des wenigstens einen Scheinwerfers zu bestimmen.

Das optisch erfassbare Muster kann direkt an einer Lichtmessvorrichtung, die den Lichtsensor enthält, angebracht sein. Das optisch erfassbare Muster kann auch an einem Träger bzw. an einer Säule der Scheinwerfereinstellvorrichtung, der bzw. die die Lichtmessvorrichtung trägt, angebracht sein.

Das optisch erfassbare Muster kann auf einer Messtafel ausgebildet sein, die an der Lichtmessvorrichtung oder an einem Träger bzw. einer Säule der Scheinwerfereinstellvorrichtung angebracht ist. Das optisch erfassbare Muster kann auch als Aufkleber ausgebildet sein, der an die Lichtmessvorrichtung oder an einen Träger bzw. an eine Säule der Scheinwerfereinstellvorrichtung geklebt wird.

Die Erfindung umfasst auch ein Verfahren zum Bestimmen einer Einstellung wenigstens eines Scheinwerfers, der in einem Kraftfahrzeug verbaut ist. Ein erfindungsgemäßes Verfahren umfasst, mit einem Fahrwerksvermessungssystem die Position und die Lage der Karosserie, insbesondere die Längssymmetrieachse der Karosserie, und/oder der geometrischen Fahrachse und/oder der Fahrzeuglängsmittelachse des Kraftfahrzeugs zu bestimmen und beim Bestimmen der Einstellung des wenigstens einen Scheinwerfers zu berücksichtigen.

Parameter der Einstellung des wenigstens einen Scheinwerfers können insbesondere den Gierwinkel und den Nickwinkel des wenigstens einen Scheinwerfers, d.h. die Ausrichtung des wenigstens einen Scheinwerfers um eine Hochachse und um eine Querachse, die orthogonal zur Hochachse und zur Längsachse des Kraftfahrzeugs ausgerichtet ist, umfassen.

Bei der Durchführung eines herkömmlichen Verfahrens zur Scheinwerfereinstellung, bei dem die Neigung des auf dem Messplatz abgestellten Kraftfahrzeugs nicht bestimmt und berücksichtigt wird, besteht die Gefahr einer fehlerhaften Scheinwerfereinstellung, wenn die Karosserie des Kraftfahrzeugs, z.B. aufgrund einer Neigung des Messplatzes, Asymmetrien des Fahrwerks und/oder unterschiedlicher Luftdrücke in den Reifen des Kraftfahrzeugs, nicht vollständig horizontal ausgerichtet ist.

Darüber hinaus wird bei herkömmlichen Verfahren zur Scheinwerfereinstellung der Gierwinkel eines Scheinwerfers, d.h. seine Ausrichtung um die Hochachse, nicht überprüft. Dies kann insbesondere dann nachteilig sein, wenn der Scheinwerfer, z.B. von einem Fahrerassistenzsystem, wenigstens teilweise automatisch betrieben und angesteuert wird.

Mit einem erfindungsgemäßen System und mit einem erfindungsgemäßen Verfahren kann eine Neigung der Karosserie des Kraftfahrzeugs um die Querachse (Nickwinkel) erkannt und bei der Auswertung der von dem Lichtsensor gelieferten Daten berücksichtigt werden. Auf diese Weise kann die Gefahr, dass die Scheinwerfer des Kraftfahrzeugs aufgrund einer nicht exakt horizontalen Ausrichtung der Karosserie des Kraftfahrzeugs nicht hinreichend genau eingestellt werden, erheblich reduziert werden.

Ein erfindungsgemäßes System kann projektionsvorrichtungsfrei, d.h. ohne eine optische Projektionsvorrichtung ausgebildet sein, denn es wird keine optische Projektionsvorrichtung, insbesondere kein Laser-Projektionsvorrichtung, benötigt, um den Lichtsensor vor dem Kraftfahrzeug zu positionieren und auszurichten.

Darüber hinaus kann auch die horizontale Ausrichtung (Gierwinkel) der Scheinwerfer in Bezug auf die Längsachse der Karosserie und/oder in Bezug auf die Längsfahrachse des Kraftfahrzeugs bestimmt und bei Bedarf korrigiert werden.

Die Zuverlässigkeit und die Genauigkeit des Bestimmens der Einstellung der Scheinwerfer eines Kraftfahrzeugs können auf diese Weise erheblich verbessert werden und die Gefahr von Fehleinstellungen der Scheinwerfer des Kraftfahrzeugs kann erheblich reduziert werden. In der Folge kann die Sicherheit beim Betrieb des Kraftfahrzeugs signifikant verbessert werden.

In einer Ausführungsform ist die Auswertevorrichtung als Teil des Fahrwerksvermessungssystems, insbesondere als Teil einer Auswertevorrichtung des Fahrwerksvermessungssystems ausgebildet. Die Auswertevorrichtung kann insbesondere als Software-Lösung in die Auswertevorrichtung des Fahrwerksvermessungssystems integriert sein. In diesem Fall kann die Auswertevorrichtung besonders kostengünstig realisiert werden, da keine zusätzliche Hardware benötigt wird.

In einer Ausführungsform ist die Auswertevorrichtung separat von dem Fahrwerksvermessungssystem, insbesondere als eigenständige Vorrichtung getrennt von einer Fahrwerksvermessungssystem-Auswertevorrichtung ausgebildet. Eine separat ausgebildete Auswertevorrichtung ermöglicht es, ein, z.B. in einer Werkstatt, vorhandenes Fahrwerksvermessungssystem durch das Hinzufügen einer solchen Auswertevorrichtung, die dazu vorgesehen und ausgebildet ist, das Bild, das von dem wenigstens einen Lichtsensor aufgenommen worden ist, auszuwerten, so weiterzubilden, dass das Fahrwerksvermessungssystem zusätzlich zur Fahrwerksvermessung auch dazu verwendet werden kann, die aktuelle Einstellung wenigstens eines Scheinwerfers des Kraftfahrzeugs zu bestimmen. Auf diese Weise kann ein bereits vorhandenes Fahrwerksvermessungssystem kostengünstig um zusätzliche Funktionen erweitert und insbesondere auch für die Scheinwerfereinstellung verwendet werden.

In einer Ausführungsform umfasst das Verfahren, mit dem Fahrwerksvermessungssystem charakteristische Merkmale der Karosserie des Kraftfahrzeugs, beispielsweise Oberkanten der Radkästen des Kraftfahrzeugs, zu identifizieren und die Positionen der charakteristischen Merkmale zu bestimmen, um daraus die Position und die Lage der Karosserie des Kraftfahrzeugs zu bestimmen. Auf diese Weise kann insbesondere die Ausrichtung der Karosserie des Kraftfahrzeugs um die Querachse (Nickwinkel) mit hoher Genauigkeit bestimmt werden.

In einer Ausführungsform umfasst das Verfahren, optische Höhenstandsmarken an vorgegebenen Punkten der Karosserie, beispielsweise an den Oberkanten der Radkästen des Kraftfahrzeugs, anzubringen und die Positionen der Höhenstandsmarken mit dem Fahrwerksvermessungssystem zu bestimmen, um daraus die Position und die Lage des Kraftfahrzeugs zu bestimmen. Mit Hilfe von optischen Höhenstandsmarken, die an charakteristischen Punkten der Karosserie, beispielsweise an den Oberkanten der Radkästen des Kraftfahrzeugs, angebracht werden, können diese charakteristischen Punkte besonders gut und zuverlässig von dem Fahrwerksvermessungssystem identifiziert werden. In der Folge können die Position und die Lage der Karosserie des Kraftfahrzeugs besonders zuverlässig mit hoher Genauigkeit bestimmt werden.

In einer Ausführungsform umfasst das Fahrwerksvermessungssystem zwei Messköpfe, die jeweils mit wenigstens zwei Kameras ausgestattet sind, und das Verfahren umfasst, jeweils einen Messkopf des Fahrwerksvermessungssystems auf der linke und rechten Seite des Kraftfahrzeugs zu positionieren. Die Messköpfe können dabei insbesondere entlang der Längserstreckung des Kraftfahrzeugs zwischen dessen Vorderachse und dessen Hinterachse positioniert werden. Auf diese Weise können die Position und Ausrichtung des Kraftfahrzeugs mit dem Fahrwerksvermessungssystem besonders platzsparend bestimmt werden.

In einer Ausführungsform umfasst das Verfahren, wenigsten eine Kamera des Systems zur Fahrwerksvermessung vor, hinter oder neben dem Kraftfahrzeug zu positionieren. Auf diese Weise können die Position und Ausrichtung des Kraftfahrzeugs besonders kostengünstig bestimmt werden.

In einer Ausführungsform ist die wenigstens eine Kamera des Fahrwerksvermessungssystems, die dazu vorgesehen und ausgebildet ist, Bilder aufzunehmen, die es ermöglichen, die Position und die Lage der Karosserie und/oder der geometrischen Fahrachse und/oder der Fahrzeuglängsmittelachse des Kraftfahrzeugs zu bestimmen, auch dazu vorgesehen und ausgebildet, wenigstens eine Bild des optisch erfassbaren Musters aufzunehmen, das es ermöglicht, die Position und die Ausrichtung des wenigstens einen Lichtsensors zu bestimmen. Insbesondere umfasst das System in dieser Ausführungsform keine zusätzliche Kamera, die ausschließlich dazu vorgesehen und ausgebildet ist, wenigstens eine Bild des optisch erfassbaren Musters aufzunehmen.

Dadurch, dass ein einem erfindungsgemäßen System die wenigstens eine der Kameras, die für die Fahrzeugvermessung verwendet werden, auch dazu verwendet wird, wenigstens ein Bild aufzunehmen, welches das optisch erfassbare Muster der Scheinwerfereinstellvorrichtung enthält, können die Kosten eine erfindungsgemäßen Systems gering gehalten werden. Insbesondere kann ein, z.B. in einer Werkstatt, bereits vorhandenes Fahrwerksvermessungssystem kostengünstig derart weitergebildet werden, dass es in der Lage ist, die aktuelle Einstellung wenigstens eines Scheinwerfers eines Kraftfahrzeugs zu bestimmen.

In einer Ausführungsform umfasst das Verfahren, mit wenigstens einem Lichtsensor ein Bild wenigstens eines Teils des von dem wenigstens einen Scheinwerfer ausgesendeten Lichtes aufzunehmen. Dabei ist der wenigstens eine Lichtsensor direkt oder indirekt mit einem optisch erfassbaren Muster, insbesondere mit einem Reflexionsmuster, verbunden, das es ermöglicht, die Position und die Ausrichtung des wenigstens einen Lichtsensors zu bestimmen. Das Verfahren umfasst darüber hinaus, mit dem Fahrwerksvermessungssystem die Position und die Ausrichtung des wenigstens einen Lichtsensors zu bestimmen und aus dem mit wenigstens einem Lichtsensor aufgenommenen Bild unter Berücksichtigung der mit dem Fahrwerksvermessungssystem bestimmten Position und Lage der Karosserie des Kraftfahrzeugs und des wenigstens einen Lichtsensors die aktuelle Einstellung des wenigstens einen Scheinwerfers maschinell zu bestimmen.

Auf diese Weise kann die aktuelle Einstellung des wenigstens einen Scheinwerfers besonders einfach und zuverlässig bestimmt werden. Durch maschinelles Bestimmen der aktuellen Einstellung des wenigstens einen Scheinwerfers kann das Verfahren deutlich beschleunigt werden, und die Gefahr, aufgrund menschlicher Fehler falsche Ergebnisse zu erhalten, kann erheblich reduziert werden.

In einer Ausführungsform umfasst das Verfahren insbesondere, das von dem wenigstens einen Lichtsensor aufgenommene Bild mit wenigstens einem vorgegebenen Bild, welches die gewünschte Einstellung des wenigstens einen Scheinwerfers repräsentiert, zu vergleichen, um Abweichungen der aktuellen Scheinwerfereinstellung von der gewünschten Scheinwerfereinstellung zu identifizieren.

Die auf diese Weise identifizierten Abweichungen der Scheinwerfereinstellung können an einen Benutzer angezeigt werden. Darüber hinaus kann dem Benutzer angezeigt werden, ob die Abweichungen vorgegebene Toleranzen überschreiten, so dass die Einstellung des betroffenen Scheinwerfers korrigiert werden muss.

Die Erfindung umfasst darüber hinaus ein Verfahren zum Einstellen wenigstens einen Scheinwerfers in einem Kraftfahrzeug, wobei das Verfahren umfasst, die aktuelle Einstellung des Scheinwerfer mit einem erfindungsgemäßen Verfahren bzw. mit einem erfindungsgemäßen System zum Bestimmen der Einstellung wenigstens eines Scheinwerfers zu bestimmen, die so bestimmte aktuelle Einstellung des Scheinwerfers mit einer vorgegebenen Einstellung des Scheinwerfers zu verglichen und die Einstellung des wenigstens einen Scheinwerfers anzupassen, wenn die zuvor bestimmte aktuelle Einstellung des Scheinwerfers um mehr als eine vorgegebene Toleranz von der vorgegebenen Einstellung des Scheinwerfers abweicht.

Ausführungsbeispiele der Erfindung werden im Folgenden unter Bezugnahme auf die beigefügten Zeichnungen beschrieben.
Figur 1 zeigt eine schematische Draufsicht auf ein Kraftfahrzeug mit zwei Scheinwerfern, das vor einer Scheinwerfereinstellvorrichtung positioniert ist.
Figur 2 zeigt eine schematische Seitenansicht des Kraftfahrzeugs und der Scheinwerfereinstellvorrichtung, die in der Figur 1 gezeigt sind.
Figur 3 zeigt eine perspektivische Ansicht des Kraftfahrzeugs und der Scheinwerfereinstellvorrichtung, die in den Figuren 1 und 2 gezeigt sind.
Figur 4 zeigt in einer schematischen Draufsicht ein weiteres Ausführungsbeispiel eines Kraftfahrzeugs mit zwei Scheinwerfern, das vor einer Scheinwerfereinstellvorrichtung zum Bestimmen einer Einstellung wenigstens eines Scheinwerfers positioniert ist.

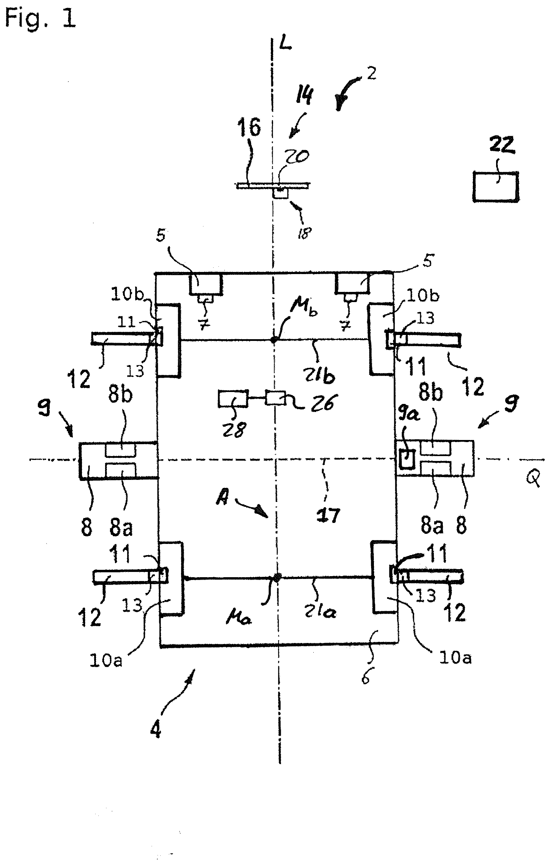

Figur 1 zeigt eine schematische Draufsicht auf ein Kraftfahrzeugs 4 mit zwei Scheinwerfern 5, das auf einem Messplatz 2 vor einer Vorrichtung 14 zum Bestimmen einer Einstellung wenigstens eines Scheinwerfers 5 positioniert ist. Die Vorrichtung 14 wird im Folgenden als Scheinwerfereinstellvorrichtung 14 bezeichnet.

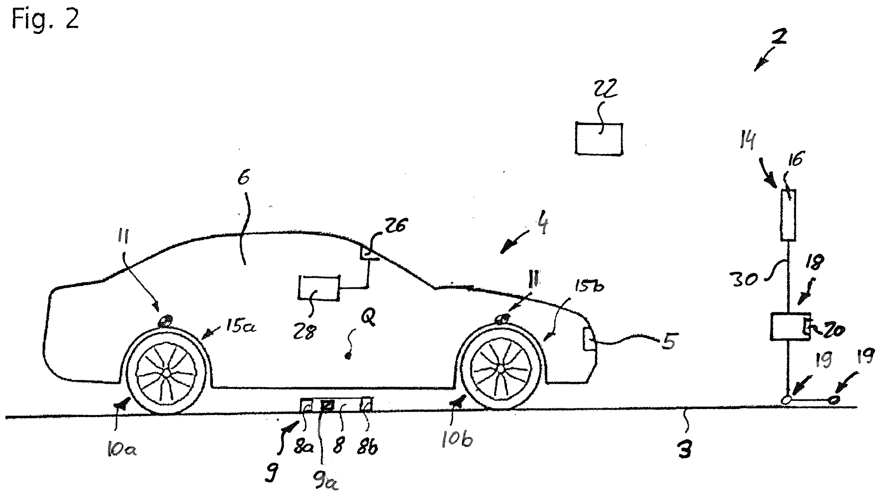

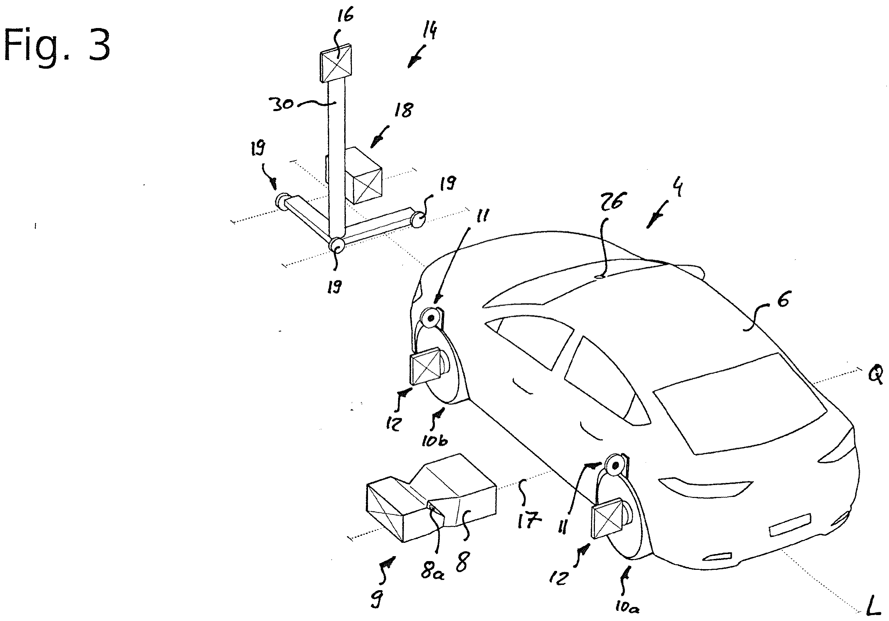

Figur 2 zeigt eine schematische Seitenansicht und Figur 3 zeigt eine perspektivische Ansicht des Kraftfahrzeugs 4 und der Scheinwerfereinstellvorrichtung 14, die auf dem Boden 3 des Messplatzes 2 angeordnet sind.

Das Kraftfahrzeug 4 hat zwei an einer Hinterachse 21a angebrachte Hinterräder 10a und zwei an einer Vorderachse 21b angebrachte Vorderräder 10b sowie zwei Scheinwerfer 5, die in einem vorderen Bereich des Kraftfahrzeugs 4 angeordnet sind. In weiteren Ausführungsbeispielen, die nicht explizit in den Figuren gezeigt sind, kann das Kraftfahrzeug 4 auch mehr oder weniger als vier Räder 10a, 10b und/oder mehr oder weniger als zwei Scheinwerfer 5 haben.

Bei der Vermessung von Kraftfahrzeugen 4 wird zwischen wenigstens drei verschiedenen Achsen unterschieden: Der Längssymmetrieachse L der Karosserie 6, der geometrischen Fahrachse und der Fahrzeuglängsmittelachse A des Kraftfahrzeugs 4. Die geometrische Fahrachse ist als die Winkelhalbierende der Spuren der Hinterräder 10a definiert. Die Fahrzeuglängsmittelachse A ist die Symmetrielängsachse der Radzentren und verbindet die Mittelpunkte Mₐ, M_{b} der Hinterachse 21a und der Vorderachse 21b miteinander.

In der vereinfachten, idealisierten Darstellung, die in den Figuren 1 und 3 gezeigt ist, stimmen die Längssymmetrieachse L, die geometrischen Fahrachse und die Fahrzeuglängsmittelachse A miteinander überein. In einem realen Kraftfahrzeug 4 können sie mehr oder weniger stark voneinander abweichen.

Das Kraftfahrzeug 4 ist mit einer Frontkamera 26 ausgestattet, die mit einem Fahrerassistenzsystem 28 verbunden ist.

Links und rechts neben dem Kraftfahrzeug 4 ist jeweils zwischen einem Vorderrad 10b und einem Hinterrad 10a des Kraftfahrzeugs ein Messkopf 8 angeordnet. Die beiden Messköpfe 8 stehen unterhalb des Kraftfahrzeugs 4 in Sichtverbindung miteinander und sind insbesondere durch eine optische Referenzstrecke 17, die unterhalb des Kraftfahrzeugs 4 verläuft, gegeneinander referenziert.

Die beiden Messköpfe 8 bilden auf diese Weise gemeinsam ein Fahrwerksvermessungssystem 9, dass es ermöglicht, die Position und die Ausrichtung des Kraftfahrzeug 4 zu bestimmen.

Jeder der beiden Messköpfe 8 weist jeweils eine nach hinten gerichtete Kamera 8a und eine nach vorne gerichtete Kamera 8b auf. Die Kameras 8a, 8b der Messköpfe 8 sind dazu vorgesehen und ausgebildet, Bilder der Karosserie 6 des Kraftfahrzeugs 4 und/oder von Radmesstafeln 12, die an den Rädern 10a, 10b des Kraftfahrzeugs 4 angebracht sein können, aufzunehmen.

Durch Auswerten der von den Kameras 8a, 8b aufgenommenen Bilder können von einer Fahrwerksvermessungssystem-Auswertevorrichtung 9a des Fahrwerksvermessungssystems 9 die Position und die Ausrichtung des Kraftfahrzeugs 4 bestimmt werden.

Die Fahrwerksvermessungssystem-Auswertevorrichtung 9a kann beispielsweise in einen der beiden Messköpfe 8 integriert sein. Die Fahrwerksvermessungssystem-Auswertevorrichtung 9a kann aber auch getrennt von den beiden Messköpfe 8 vorgesehen sein.

In der Figur 1 sind optische Radmesstafeln 12 gezeigt, die mit Hilfe von Radhaltern 13 an den Rädern 10a, 10b des Kraftfahrzeugs 4 angebracht sind. In der Figur 2 sind die Radmesstafeln 12 und die Radhalter 13 nicht gezeigt.

Die an den Rädern 10a, 10b des Kraftfahrzeugs 4 angebrachten Radmesstafeln 12 ermöglichen es dem Fahrwerksvermessungssystem 9, die geometrische Fahrachse des Kraftfahrzeugs 4 zu bestimmen.

An der Karosserie 6 des Kraftfahrzeugs 4 können an fest vorgegebenen Positionen, beispielsweise an den höchsten Punkten der Radkästen 15a, 15b, in denen die Räder 10a, 10b angeordnet sind, optische Höhenstandsmarken 11 angebracht sein.

Die optischen Höhenstandsmarken 11 erleichtern es, die vorgegebenen Positionen in den von den Kameras 8a, 8b aufgenommenen Bildern zu identifizieren. Die optische Höhenstandsmarken 11 können beispielsweise mit Saugnäpfen oder Klebepads ausgebildet sein, die es ermöglichen, die Höhenstandsmarken 11 an der Karosserie 6 des Kraftfahrzeugs 4 zu befestigen. Die optische Höhenstandsmarken 11 können auch Magneten aufweisen oder magnetisch ausgebildet sein, so dass die optischen Höhenstandsmarken 11 magnetisch an der Karosserie 6 des Kraftfahrzeugs 4 angebracht werden. Die optische Höhenstandsmarken 11 können auch mit Hilfe von Klemmvorrichtungen, die in den Figuren nicht explizit gezeigt sind, an der Karosserie 6 des Kraftfahrzeug 4 angebracht sein.

Vor dem Kraftfahrzeug 4 befindet sich eine Scheinwerfereinstellvorrichtung 14 zum Bestimmen einer Einstellung wenigstens eines der Scheinwerfer 5 des Kraftfahrzeugs 4.

Die Scheinwerfereinstellvorrichtung 14 kann mobil, insbesondere mit in den Figuren 2 und 3 gezeigten Rollen 19, ausgebildet sein, die es ermöglichen, die Scheinwerfereinstellvorrichtung 14 vor dem Kraftfahrzeug 4 zu bewegen und insbesondere vor einem der Scheinwerfer 5 des Kraftfahrzeugs 4 zu positionieren.

Die Scheinwerfereinstellvorrichtung 14 umfasst wenigsten eine Lichtmessvorrichtung 18 ("Lichtkasten") mit einem Lichtsensor 20, der dazu vorgesehen und ausgebildet ist, wenigstens ein Bild wenigstens eines Teils des von einem der Scheinwerfer 5 im Betrieb ausgesendeten Lichtes aufzunehmen.

Die Scheinwerfereinstellvorrichtung 14 umfasst darüber hinaus ein optisch erfassbares Muster 16, insbesondere ein Reflexionsmuster, das direkt oder indirekt mit dem Lichtmessvorrichtung 18 und dem Lichtsensor 20 verbunden ist. Das optisch erfassbare Muster 16 ermöglicht es dem Fahrwerksvermessungssystem 9, durch Identifizieren des optisch erfassbaren Musters 16 in den Bildern, die von den nach vorne oder hinten gerichtete Kameras 8a, 8b des Fahrwerksvermessungssystems 9 aufgenommen worden sind, die Position und die Ausrichtung der wenigstens einen Lichtmessvorrichtung 18 und des Lichtsensors 20 zu bestimmen.

Das optisch erfassbare Muster 16 kann direkt an der Lichtmessvorrichtung 18 ("Lichtkasten") oder an einer Säule 30 der Scheinwerfereinstellvorrichtung 14 angebracht sein.

Das optisch erfassbare Muster 16 kann auf einer Messtafel ausgebildet sein, die an der Lichtmessvorrichtung 18 oder an einer Säule 30 oder einem in den Figuren nicht gezeigten Träger der Scheinwerfereinstellvorrichtung 14 angebracht ist. Das optisch erfassbare Muster 16 kann auch als Aufkleber ausgebildet sein, der an die Lichtmessvorrichtung 18 oder an die Säule 30 bzw. an den Träger der Scheinwerfereinstellvorrichtung 14 geklebt wird.

Ein erfindungsgemäßes Verfahren zum Bestimmen einer Einstellung wenigstens eines Scheinwerfers 5, der in einem Kraftfahrzeug 4 verbaut ist, umfasst, mit den Kameras 8a, 8b des Fahrwerksvermessungssystem 9 wenigstens ein Bild der Karosserie 6 des Kraftfahrzeugs 4 und/oder Bilder der an den Rädern 10a, 10b des Kraftfahrzeugs 4 angebrachten Radmesstafeln 12 und/oder Bilder der an der Karosserie 6 des Kraftfahrzeugs 4 angebrachten Höhenstandsmarken 11 aufzunehmen und durch Auswerten der von den Kameras 8a, 8b des Fahrwerksvermessungssystems 9 aufgenommenen Bilder die Position und Ausrichtung der Karosserie 6 des Kraftfahrzeugs 4 zu bestimmen.

In einem erfindungsgemäßen System zum Bestimmen der Einstellung wenigstens eines Scheinwerfers 5 in einem Kraftfahrzeug 4 wird wenigstens eine der Kameras 8a, 8b, die für die Fahrzeugvermessung verwendet wird, auch dazu verwendet, wenigstens ein Bild aufzunehmen, welches das optisch erfassbare Muster 16 der Scheinwerfereinstellvorrichtung 14 enthält. Ein erfindungsgemäßes System umfasst insbesondere keine zusätzliche Kamera, die ausschließlich dazu vorgesehen ist, Bilder aufzunehmen, die das optisch erfassbare Muster 16 der Scheinwerfereinstellvorrichtung 14 enthalten.

Durch Auswerten der Bilder von Radmesstafeln 12, die an den Rädern 10a, 10b des Kraftfahrzeugs 4 angebracht sind, können optional auch die geometrische Fahrachse und/oder die Fahrzeuglängsmittelachse A des Kraftfahrzeugs 4 bestimmt werden.

Das Verfahren umfasst darüber hinaus, mit wenigstens einer der Kameras 8a, 8b wenigstens ein Bild des an der Scheinwerfereinstellvorrichtung 14 angebrachten Musters 16 aufzunehmen und daraus die Position und Ausrichtung der Lichtmessvorrichtung 18 zu bestimmen.

Sobald die Positionen und Ausrichtungen der Lichtmessvorrichtung 18 mit dem Lichtsensor 20 und der Karosserie 6 des Kraftfahrzeugs 4 bekannt sind, können auch die Position und Ausrichtung des Lichtsensors 20 in Bezug auf die Karosserie 6, insbesondere in Bezug auf die Längssymmetrieachse L der Karosserie 6L der Karosserie 4, bestimmt werden.

Wenn mit Hilfe von an den Rädern 10a, 10b des Kraftfahrzeugs 4 angebrachten Radmesstafeln 12 auch die geometrische Fahrachse oder die Fahrzeuglängsmittelachse A des Kraftfahrzeugs 4 bestimmt worden ist, können auch die Position und die Ausrichtung der Lichtmessvorrichtung 18 in Bezug auf die Fahrachse des Kraftfahrzeugs 4 bestimmt werden.

Mit dem Lichtsensor 20 der Lichtmessvorrichtung 18 wird wenigstens ein Bild wenigstens eines Teils des Lichtes aufgenommen, der von dem wenigstens einen Scheinwerfer 5 ausgestrahlt wird.

Ein erfindungsgemäßes System zum Bestimmen der Einstellung wenigstens eines Scheinwerfers 5 in einem Kraftfahrzeug 4 umfasst auch eine Auswertevorrichtung 22, die dazu vorgesehen und ausgebildet ist, das wenigstens eine von dem Lichtsensor 20 der Lichtmessvorrichtung 18 aufgenommenen Bild auszuwerten und daraus unter Berücksichtigung des Position und Lage der Karosserie 6 des Kraftfahrzeugs 4, die zuvor von dem Fahrwerksvermessungssystem 9 bestimmt worden sind, die Einstellung des Scheinwerfers 5 zu bestimmen.

Dabei kann die Ausrichtung des wenigstens einen Scheinwerfers 5 insbesondere sowohl in Bezug auf die Hochachse H (Gierwinkel) als auch in Bezug auf die Querachse Q (Nickwinkel) des Kraftfahrzeugs 4 bestimmt werden.

Die Auswertevorrichtung 22 kann drahtlos, z.B. über eine WLAN- oder Bluetooth-Datenverbindung, oder drahtgebunden mit der Lichtmessvorrichtung 18 und mit dem Fahrwerksvermessungssystem 9 kommunizieren.

Die Auswertevorrichtung 22 kann separat von dem Fahrwerksvermessungssystem 9 ausgebildet sein. Eine separat ausgebildete Auswertevorrichtung 22 ermöglicht es, ein bestehendes Fahrwerksvermessungssystem 9 durch das Hinzufügen einer solchen Auswertevorrichtung 22 kostengünstig so weiterzubilden, dass es zusätzlich zur Fahrwerksvermessung auch dazu verwendet werden kann, die aktuelle Einstellung wenigstens eines Scheinwerfers 5 des Kraftfahrzeugs 4 zu bestimmen.

Die Auswertevorrichtung 22 kann beispielsweise an der Scheinwerfereinstellvorrichtung 14 angebracht sein.

Alternativ kann die Auswertevorrichtung 22 auch als Teil des Fahrwerksvermessungssystems 9 ausgebildet sein. Die Auswertevorrichtung 22 kann beispielsweise in einem der Messköpfe 8 angeordnet sein. Die Auswertevorrichtung 22 kann insbesondere in die Fahrwerksvermessungssystem-Auswertevorrichtung 9a integriert sein. Die Auswertevorrichtung 22 kann zum Beispiel als Software-Lösung in die Fahrwerksvermessungssystem-Auswertevorrichtung 9a integriert sein.

Die von Auswertevorrichtung 22 bestimmte Einstellung des Scheinwerfers 5 kann maschinell und/oder manuell mit einer vorgegebenen Scheinwerfereinstellung verglichen werden. Das Vergleichen kann insbesondere umfassen, das von dem wenigstens einen Lichtsensor 20 aufgenommene Bild maschinell oder manuell mit wenigstens einem vorgegebenen Bild, das eine vorgegebene Scheinwerfereinstellung repräsentiert, zu vergleichen.

Ausführungsbeispiele der Erfindung umfassen auch ein Verfahren zum Einstellen wenigstens eines Scheinwerfers 5 in einem Kraftfahrzeug 4, wobei das Verfahren umfasst, die aktuelle Einstellung des wenigstens einen Scheinwerfers 5 mit einem erfindungsgemäßen Verfahren, wie es zuvor beschrieben worden ist, zu bestimmen, die so bestimmte aktuelle Einstellung des wenigstens einen Scheinwerfers 5 mit einer vorgegebenen Einstellung zu vergleichen und die Einstellung des wenigstens einen Scheinwerfers 5 anzupassen bzw. zu korrigieren, wenn die aktuelle Einstellung um mehr als eine vorgegebene Toleranz von der vorgegebenen Einstellung abweicht. Die dabei anzupassenden Parameter können insbesondere den Gierwinkel und/oder den Nickwinkel des wenigstens einen Scheinwerfers 5 umfassen.

Das Verfahren kann zusätzlich umfassen, optische oder akustische Anweisungen an einen Mechaniker auszugeben, die enthalten, wie die Einstellung des wenigstens einen Scheinwerfers 5 anzupassen ist.

Das Verfahren kann auch umfassen, Steuerbefehle an Aktuatoren 7 auszugeben, die im Kraftfahrzeug 4 verbaut und dazu ausgebildet sind, die Einstellung des wenigstens einen Scheinwerfers 5 gemäß den empfangenen Steuerbefehlen anzupassen. Die Steuerbefehle können zum Beispiel umfassen, den wenigstens einen Scheinwerfer 5 um seine Hochachse und/oder um seine Querachse zu schwenken.

Das Übertragen der Steuerbefehle an die im Kraftfahrzeug 4 verbaute Aktuatoren 7 kann drahtgebunden oder drahtlose erfolgen.

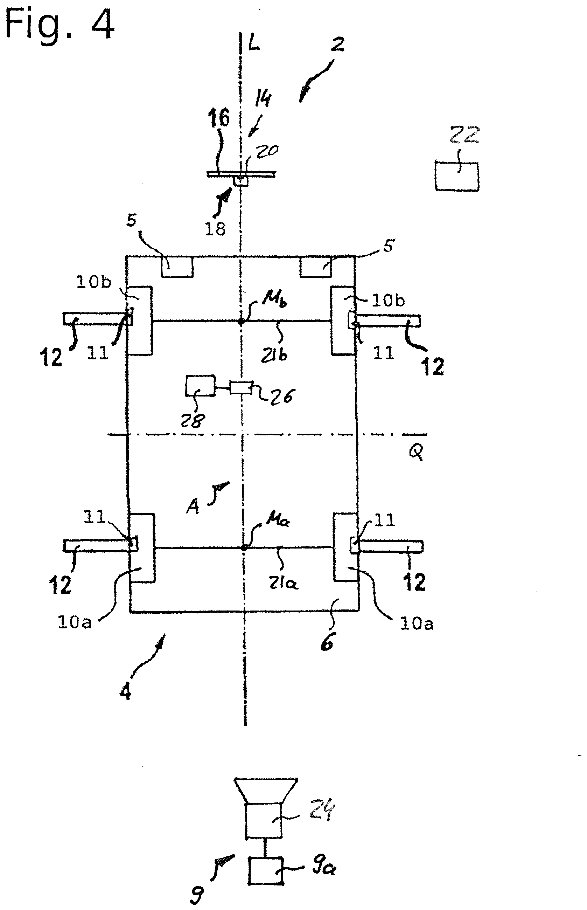

Figur 4 zeigt in einer schematischen Draufsicht ein weiteres Ausführungsbeispiel eines Kraftfahrzeugs 4 mit zwei Scheinwerfern 5, das vor einer Scheinwerfereinstellvorrichtung 14 zum Bestimmen einer Einstellung wenigstens eines Scheinwerfers 5 des Kraftfahrzeugs 4 positioniert ist.

Im Gegensatz zu dem in den Figuren 1 bis 3 gezeigten Ausführungsbeispiel umfasst das die Figur 4 gezeigte Fahrwerksvermessungssystem 9 nicht zwei Messköpfe 8 mit Kameras 8a, 8b, die seitlich neben dem Kraftfahrzeug 4 angeordnet sind, sondern wenigstens eine Kamera 24, die hinter dem Kraftfahrzeug 4 angeordnet und dazu vorgesehen und ausgebildet ist, Bilder des Kraftfahrzeugs 4 und der Scheinwerfereinstellvorrichtung 14 zum Bestimmen einer Einstellung wenigstens eines Scheinwerfers 5 aufzunehmen.

In weiteren, in den Figuren nicht explizit gezeigten, Ausführungsbeispielen kann die Kamera 24 auch an anderen Positionen, z.B. in einer Position vor dem Kraftfahrzeug 4 angeordnet sein, wenn sie in der Lage ist, Bilder sowohl des Kraftfahrzeugs 4 als auch der Scheinwerfereinstellvorrichtung 14 aufzunehmen.

Bei der Kamera 24 kann es sich um eine Mono-Kamera 24 oder um eine Stereo-Kamera 24 handeln. Das Fahrwerksvermessungssystem 9 kann auch zwei Kameras 24 aufweisen, die in einem vorgegebenen Abstand voneinander angeordnet sind.

Auch in dem in der Figur 4 gezeigten Ausführungsbeispiel ist das Fahrwerksvermessungssystem 9 dazu vorgesehen und ausgebildet, mit der wenigstens einen Kamera 24 Bilder der Karosserie 6 des Kraftfahrzeugs 4 und des Musters 16, das an der Scheinwerfereinstellvorrichtung 14 angebracht ist, aufzunehmen und die Position und die Ausrichtung des Lichtsensors 20 der Lichtmessvorrichtung 18 in Bezug auf die Karosserie 6 des Kraftfahrzeugs 4 zu bestimmen, wie es zuvor für das in den Figuren 1 und 2 gezeigte Ausführungsbeispiel beschrieben worden ist.

Auch mit einem System zum Bestimmen der Einstellung wenigstens eines Scheinwerfers 5 in einem Kraftfahrzeug 4 wie es in der Figur 4 gezeigt ist, können die Position und die Ausrichtung des Lichtsensors 20 in Bezug auf die Karosserie 6 des Kraftfahrzeugs 4, die mit dem Fahrwerksvermessungssystem 9 bestimmt worden sind, genutzt werden, um aus wenigsten einem Bild wenigstens eines Teils des von wenigstens einen Scheinwerfer 5 im Betrieb ausgesendeten Lichtes die Einstellung des wenigstens einen Scheinwerfers 5 zu bestimmen und bei Bedarf zu korrigieren.

Bei der herkömmlichen Bestimmung und Einstellung der Scheinwerfer 5 von Kraftfahrzeugen 4 wird vorausgesetzt, dass das Kraftfahrzeug 4 auf einem ebenen und nivellierten Boden 3 positioniert ist, so dass auch die Karosserie 6 des Kraftfahrzeugs 4 horizontal ausgerichtet ist.

Diese Voraussetzungen sich aber nicht immer gegeben bzw. erfüllbar. Zum einen ist es möglich, dass zum Bestimmen und ggf. Korrigieren der Einstellungen der Scheinwerfer 5 eines Kraftfahrzeugs 4 kein nivellierter Boden 3 zur Verfügung steht und das Bestimmen und ggf. Korrigieren der Einstellungen der Scheinwerfer 5 daher auf einem nicht nivellierten, insbesondere auf einem geneigten, Boden 3 durchgeführt werden muss.

Selbst wenn die Räder 10a, 10b des Kraftfahrzeug 4 auf einem exakt nivellierten Boden 3 angeordnet sind, kann die Karosserie 6 des Kraftfahrzeugs 4 um die Querachse Q geneigt sein, z.B. weil die sich der Luftdruck in den Reifen der hinteren und vorderen Räder 10a, 10b des Kraftfahrzeugs 4 unterscheidet und/oder weil die Federn und/oder Stoßdämpfer des Kraftfahrzeugs 4 an den hinteren und vorderen Rädern 10a, 10b unterschiedlich ausgebildet sind und/oder sich in unterschiedlichen technischen Zuständen befinden.

Mit herkömmlichen Scheinwerfereinstellgeräten werden der Nickwinkel und der Rollwinkel nur in Bezug auf die Schwerkraft gemessen. Es besteht daher die Gefahr einer fehlerhaften Einstellung der Scheinwerfer, wenn das Fahrzeug verzogen ist, Fahrwerkskomponenten defekt sind, oder die Luftdrücke oder Profiltiefen der Reifen an den Rädern 10a, 10b unterschiedlich sind.

Eine weitere mögliche Messungenauigkeit ergibt sich daraus, dass mit herkömmlichen Scheinwerfereinstellgeräten der Gierwinkel der Scheinwerfer 5 in Bezug auf die Karosserie 6 eingestellt wird, die Kamera(s) 26 von Fahrerassistenzsystemen 28 aber in Bezug auf die geometrische Fahrachse 21a des Kraftfahrzeugs 4 kalibriert werden. Für eine optimales Zusammenwirken der Scheinwerfer 5 mit den Fahrerassistenzsystemen 28 ist es in diesem Fall vorteilhaft, wenn auch die Scheinwerfer 5 in Bezug auf die geometrische Fahrachse 21a des Kraftfahrzeugs 4 kalibriert werden, wie es durch eine erfindungsgemäßes System und ein erfindungsgemäßes Verfahren ermöglicht wird.

Mit einem erfindungsgemäßen System und einem erfindungsgemäßen Verfahren kann die Ausrichtung der Scheinwerfer 5 wahlweise unter Verwendung der an der Karosserie 6 angebrachten Höhenstandsmarken 11 in Bezug auf die Karosserie 6 oder mit Hilfe der an den Rädern 10 angebrachten Radmesstafeln 12 in Bezug auf das Fahrwerk, insbesondere in Bezug auf die geometrische Fahrachse 21a des Kraftfahrzeugs 4 durchgeführt werden.

Mit einem erfindungsgemäßen System und einem erfindungsgemäßen Verfahren zum Bestimmen einer Einstellung eines Scheinwerfers 5 kann eine solche Neigung der Karosserie 6 des Kraftfahrzeugs 4 um die Querachse Q erkannt und bei der Auswertung der von dem Lichtsensor 20 gelieferten Daten berücksichtigt werden. Dabei können insbesondere der Gierwinkel und der Nickwinkel der Karosserie 6 des Kraftfahrzeugs 4, d.h. die Winkel des Karosserie 6 um die Hochachse H und um die Querachse Q des Kraftfahrzeugs 4, bestimmt und berücksichtigt werden.

Dadurch kann die Gefahr, dass die Scheinwerfer 5 des Kraftfahrzeugs 4 aufgrund einer nicht exakt horizontalen Ausrichtung der Karosserie 6 des Kraftfahrzeug 4 nicht hinreichend genau eingestellt werden, erheblich reduziert werden.

Eine erfindungsgemäßes System und ein erfindungsgemäßes Verfahren zum Bestimmen der Einstellung wenigstens eines Scheinwerfers 5 in einem Kraftfahrzeug 4 ermöglichen es, die Einstellung des wenigstens einen Scheinwerfers 5 unabhängig von der aktuellen Ausrichtung der Karosserie 6 des Kraftfahrzeugs 4 in Bezug auf die Scheinwerfereinstellvorrichtung 14 zu bestimmen.

Die Einstellung des wenigstens einen Scheinwerfers 5 kann insbesondere auch dann mit hoher Genauigkeit bestimmt werden, wenn die Karosserie 6 des Kraftfahrzeugs 4 nicht exakt horizontal ausgerichtet ist.

Die Zuverlässigkeit und die Genauigkeit des Bestimmens der Einstellung wenigstens eines Parameters wenigstens eines Scheinwerfers 5 des Kraftfahrzeugs 4 können auf diese Weise verbessert werden. Dies ist insbesondere bei modernen Scheinwerfern 5, die auf LED- oder Laser-Technologie beruhen, vorteilhaft, da diese eine erheblich größere Reichweite als konventionelle Scheinwerfer 5 aufweisen. Die erheblich größere Reichweite moderner Scheinwerfer 5 hat zur Folge, dass auch eine größere Gefahr besteht, dass Fahrer entgegenkommender oder vorausfahrender Kraftfahrzeuge 4 geblendet werden, wenn die Scheinwerfer 5 nicht korrekt eingestellt sind. Im Ergebnis kann daher durch ein erfindungsgemäßes System und ein erfindungsgemäßes Verfahren die Sicherheit des Kraftfahrzeugs 4 erhöht werden, da die Gefahr von Fehleinstellungen der Scheinwerfer 5 des Kraftfahrzeugs 4 erheblich reduziert werden kann.

## Patentansprüche

1. System zum Bestimmen der Einstellung wenigstens eines Scheinwerfers (5) in einem Kraftfahrzeug (4), wobei das System umfasst,
ein Fahrwerksvermessungssystem (9), das dazu vorgesehen und ausgebildet ist, die Position und die Lage der Karosserie (6) und/oder der geometrischen Fahrachse und/oder der Fahrzeuglängsmittelachse (A) des Kraftfahrzeugs (4) bestimmen;
wenigstens einen Lichtsensor (20), der dazu vorgesehen und ausgebildet ist, ein Bild wenigstens eines Teils des von dem wenigstens einen Scheinwerfer (5) ausgesendeten Lichtes aufzunehmen, wobei der wenigstens eine Lichtsensor (20) direkt oder indirekt mit einem optisch erfassbaren Muster (16) verbunden ist, das es ermöglicht, die Position und die Ausrichtung des wenigstens einen Lichtsensors (20) zu bestimmen; und
eine Auswertevorrichtung (22), die dazu vorgesehen und ausgebildet ist, aus dem Bild, das von dem wenigstens einen Lichtsensor (20) aufgenommen worden ist, unter Berücksichtigung der von dem Fahrwerksvermessungssystem (9) bestimmten Position und Lage der Karosserie (6) und/oder der geometrischen Fahrachse und/oder der Fahrzeuglängsmittelachse (A) des Kraftfahrzeugs (4) und des wenigstens einen Lichtsensors (20) die aktuelle Einstellung des wenigstens einen Scheinwerfers (5) zu bestimmen.

2. System nach Anspruch 1,
wobei die Auswertevorrichtung (22) dazu vorgesehen und ausgebildet ist, das von dem wenigstens einen Lichtsensor (20) aufgenommene Bild mit wenigstens einem vorgegebenen Bild zu vergleichen; wobei die Auswertevorrichtung (22) insbesondere dazu vorgesehen und ausgebildet ist, Anweisungen zum Anpassen der Einstellung des wenigstens einen Scheinwerfers (5) auszugeben, wenn das aufgenommene Bild um mehr als eine vorgegebene Toleranz von dem wenigstens einen vorgegebenen Bild abweicht.

3. System nach Anspruch 1 oder 2,
wobei die Auswertevorrichtung (22) separat von dem Fahrwerksvermessungssystem (9), insbesondere separat von einer Fahrwerksvermessungssystem-Auswertevorrichtung (9a) des Fahrwerksvermessungssystems (9), ausgebildet ist.

4. System nach Anspruch 1 oder 2,
wobei die Auswertevorrichtung (22) als Teil des Fahrwerksvermessungssystems (9), insbesondere als Teil einer Auswertevorrichtung (9a) des Fahrwerksvermessungssystems (9), ausgebildet ist.

5. System nach einem der Ansprüche 1 bis 4,
wobei das Fahrwerksvermessungssystem (9) wenigstens zwei Messköpfe (8) aufweist, die mit jeweils wenigstens eine Kamera (8a, 8b) ausgestattet sind und die dazu vorgesehen und ausgebildet sind, auf jeweils einer Seite des Kraftfahrzeugs (4) angeordnet zu werden, um Bilder aufzunehmen, die es ermöglichen, die Position und die Lage der Karosserie (6) und/oder der geometrischen Fahrachse und/oder der Fahrzeuglängsmittelachse (A) des Kraftfahrzeugs (4) zu bestimmen; und/oder
wobei das Fahrwerksvermessungssystem (9) wenigstens eine Kamera (24) aufweist, die dazu vorgesehen und ausgebildet ist, vor, hinter oder neben dem Kraftfahrzeug (4) angeordnet zu werden, um Bilder aufzunehmen, die es ermöglichen, die Position und die Lage der Karosserie (6) des Kraftfahrzeugs (4) zu bestimmen.

6. System nach Anspruch 5,
wobei die wenigstens eine Kamera (8a, 8b, 24) des Fahrwerksvermessungssystems (9), die dazu vorgesehen und ausgebildet ist, Bilder aufzunehmen, die es ermöglichen, die Position und die Lage der Karosserie (6) und/oder der geometrischen Fahrachse und/oder der Fahrzeuglängsmittelachse (A) des Kraftfahrzeugs (4) zu bestimmen, auch dazu vorgesehen und ausgebildet ist, wenigstens eine Bild des optisch erfassbaren Musters (16) aufzunehmen, das es ermöglicht, die Position und die Ausrichtung des wenigstens einen Lichtsensors (20) zu bestimmen.

7. Verfahren zum Bestimmen einer Einstellung wenigstens eines Scheinwerfers (5), der in einem Kraftfahrzeug (4) verbaut ist, wobei das Verfahren umfasst,
mit einem Fahrwerksvermessungssystem (9) die Position und die Lage der Karosserie (6) und/oder der geometrischen Fahrachse und/oder der Fahrzeuglängsmittelachse (A) des Kraftfahrzeugs (4) bestimmen und beim Bestimmen der Einstellung des wenigstens einen Scheinwerfers (5) zu berücksichtigen.

8. Verfahren nach Anspruch 7, wobei das Verfahren umfasst, mit einer Auswertevorrichtung (22) aus dem Bild, das von dem wenigstens einen Lichtsensor (20) aufgenommen worden ist, unter Berücksichtigung der von dem Fahrwerksvermessungssystem (9) bestimmten Position und Lage der Karosserie (6) und/ oder der geometrischen Fahrachse und/oder der Fahrzeuglängsmittelachse (A) des Kraftfahrzeugs (4) und des wenigstens einen Lichtsensors (20) die aktuelle Einstellung des wenigstens einen Scheinwerfers (5) zu bestimmen.

9. Verfahren nach Anspruch 8,
wobei die Auswertevorrichtung (22) separat von dem Fahrwerksvermessungssystem (9), insbesondere separat von einer Fahrwerksvermessungssystem-Auswertevorrichtung (9a) des Fahrwerksvermessungssystems (9) ausgebildet ist, oder
wobei die Auswertevorrichtung (22) als Teil des Fahrwerksvermessungssystems (9), insbesondere als Teil einer Fahrwerksvermessungssystem-Auswertevorrichtung (9a) des Fahrwerksvermessungssystems (9), ausgebildet ist.

10. Verfahren nach einem der Ansprüche 7 bis 9, wobei das Verfahren umfasst, mit dem Fahrwerksvermessungssystem (9) charakteristische Merkmale der Karosserie (6) des Kraftfahrzeugs (4), insbesondere Oberkanten von Radkästen (15a, 15b) des Kraftfahrzeugs (4), zu identifizieren und die Positionen der charakteristischen Merkmale zu bestimmen und daraus die Position und die Lage der Karosserie (6) des Kraftfahrzeugs (4) zu bestimmen.

11. Verfahren nach einem der Ansprüche 7 bis 10, wobei das Verfahren umfasst, Höhenstandsmarken (11) an vorgegebenen Punkten der Karosserie (6), beispielsweise an den Oberkanten der Radkästen (15a, 15b) des Kraftfahrzeugs (4), anzubringen und die die Positionen der Höhenstandsmarken (11) mit dem Fahrwerksvermessungssystem (9) zu bestimmen, um daraus die Position und die Lage des Kraftfahrzeugs (4) zu bestimmen.

12. Verfahren nach einem der Ansprüche 7 bis 11, wobei das Verfahren umfasst, jeweils einen Messkopf (8) des Fahrwerksvermessungssystems (9) auf der linken und rechten Seite des Kraftfahrzeugs (4) zu positionieren; und/oder wobei das Verfahren umfasst, wenigsten eine Kamera (24) des Fahrwerksvermessungssystems (9) vor oder hinter dem Kraftfahrzeug (4) zu positionieren.

13. Verfahren nach einem der Ansprüche 7 bis 12, wobei das Verfahren umfasst,
mit wenigstens einem Lichtsensor (20) ein Bild wenigstens eines Teils des von dem wenigstens einen Scheinwerfer (5) ausgesendeten Lichtes aufzunehmen, wobei der wenigstens eine Lichtsensor (20) insbesondere direkt oder indirekt mit einem optisch erfassbaren Muster (16) verbunden ist, das es ermöglicht, die Position und die Ausrichtung des wenigstens einen Lichtsensors (20) zu bestimmen;
mit dem Fahrwerksvermessungssystem (9) die Position und Ausrichtung des wenigstens einen Lichtsensors (20) zu bestimmen; und
aus dem aufgenommenen Bild unter Berücksichtigung der mit dem Fahrwerksvermessungssystem (9) bestimmten Position und Lage der Karosserie (6) und/ oder der geometrischen Fahrachse und/oder der Fahrzeuglängsmittelachse (A) des Kraftfahrzeugs (4) und des wenigstens einen Lichtsensors (20) die aktuelle Einstellung des wenigstens einen Scheinwerfers (5) maschinell zu bestimmen.

14. Verfahren nach einem der Ansprüche 7 bis 13, wobei das Verfahren umfasst, die bestimmte aktuelle Einstellung des wenigstens einen Scheinwerfers (5) mit einer vorgegebenen Einstellung zu vergleichen; wobei das Verfahren insbesondere umfasst, das von dem wenigstens einen Lichtsensor (20) aufgenommene Bild mit wenigstens einem vorgegebenen Bild zu vergleichen.

15. Verfahren zum Einstellen wenigstens einen Scheinwerfers (5) in einem Kraftfahrzeug (4), wobei das Verfahren umfasst,
die aktuelle Einstellung des Scheinwerfers (5) mit einem Verfahren nach Anspruch 14 zu bestimmen; und
die Einstellung des wenigstens einen Scheinwerfers (5) anzupassen, wenn die bestimmte aktuelle Einstellung des Scheinwerfers (5) um mehr als eine vorgegebene Toleranz von der vorgegebenen Einstellung des Scheinwerfers (5) abweicht.
